# FASCICULE DE BREVET EUROPEEN

(11) **EP 1 124 767 B1**
(45) Date de publication et mention de la délivrance du brevet: **14.08.2002**
(21) Numéro de dépôt: 99970376.2
(22) Date de dépôt: 06.10.1999
(51) Int. Cl.: C03C 8/16

(54) **COMPOSITION D'APPLICATION D'EMAIL ET PROCEDE DE FABRICATION DE PIECES FORMEES EMAILLEES**
EMAILANWENDUNGSZUSAMMENSETZUNG UND VERFAHREN ZUR HERSTELLUNG VON GEFORMTEN EMAILLIERTEN GEGENSTÄNDEN
ENAMEL APPLICATION COMPOSITION AND METHOD FOR MAKING ENAMELLED FORMED PARTS

(30) Priorité: 12.10.1998 FR 9812769
(43) Date de publication de la demande: 22.08.2001
(73) Titulaire: SOLLAC, 92800 Puteaux (FR); Becker Industrie, 42601 Montbrison Cedex (FR)
(72) Inventeur: HELLOUIN, Rémy, F-60500 Chantilly (FR); CHOLET, Vincent, F-57070 Metz (FR); GENEVAY, Jean-Pierre, 42600 Montbrison (FR)
(74) Mandataire: Neyret, Daniel
(86) Numéro de dépôt international: FR9902381
(87) Numéro de publication internationale: WO0021897

(56) Documents cités:
- EP-A- 0 219 131
- US-A- 4 500 698
- US-A- 4 782 128
- US-A- 5 312 868
- US-A- 5 325 580

## Description

L'invention concerne une composition pour application d'émail et un procédé d'émaillage de pièces métalliques.

Le document US 5 325 580 - BAYER - décrit un procédé de production de pièces formées en tôle émaillée, dans lequel :
- avant mise en forme, on applique sur une tôle d'acier au moins une couche de composition d'application d'émail comprenant une fritte d'émail vitrifiable dispersée dans un liant polymère, puis on sèche et/ou on cuit l'au moins une couche,
- on met ensuite en forme la tôle dans la forme de la pièce,
- optionnellement, on applique ensuite sur la pièce au moins une autre couche de fritte d'émail vitrifiable,
- on cuit ensuite la pièce à une température comprise entre 560°C et 850°C, dans des conditions adaptées à la nature de l'acier et de la fritte d'émail utilisés, afin d'obtenir la vitrification de l'émail.

L'éventuelle cuisson avant mise en forme est une cuisson de réticulation du liant polymère, alors que la cuisson après mise en forme est une cuisson de vitrification de l'émail à une température supérieure à la température T_{g} de transition vitreuse de la fritte d'émail vitrifiable.

Ainsi, la température de la première cuisson (réticulation) est largement inférieure à la température de la deuxième cuisson (vitrification).

Lors de la première cuisson, le liant polymère est « consolidé » par réticulation alors que lors de la deuxième cuisson, il est « éliminé » par décomposition thermique et/ou pyrolyse.

La tôle obtenue est revêtue d'une couche entièrement minérale d' « émail vitreux » (« vitreous enamel » en langue anglaise) comprenant une phase vitreuse continue dans laquelle sont dispersées des charges minérales d'opacification et/ou de coloration ; dans toute la suite du document, les termes « émail vitrifiable » ou « émail vitreux » sont désignés plus brièvement par « émail » ; cette acception se différencie ainsi totalement des revêtements polymères fortement chargés en éléments minéraux, vitreux ou non, parfois désignés comme « enamel » en langue anglaise, notamment parce qu'ils ne comportent pas de phase vitreuse continue.

Un tel procédé est très avantageux car l'application sur tôle plane d'une couche d'émaillage avant mise en forme permet d'éviter toutes les complications relatives à une opération d'application de la même couche sur pièce déjà formée.

Par ailleurs, les tôles d'acier déjà revêtues de composition d'émaillage mais non encore mises en forme, peuvent être, dans cet état intermédiaire, transportées et stockées en attendant la mise en forme et la cuisson de vitrification de l'émail.

La composition d'application d'émail contient essentiellement un liant polymère en solution dans un solvant et une fritte d'émail en suspension dans la solution ; en outre, cette composition contient généralement un agent de suspension (ou anti-sédimentation), des agents mouillants et des agents de dégazage (« air release agents » en langue anglaise).

Selon l'exemple 1 du document US 5 325 580 , comme liant, on utilise des mélanges thermoplastiques de polymères polyhydroxypolyacrylates et polyhydroxypolyesters (proportions 9 pour 1 à 6 pour 4) ; ces mélanges sont exempts d'azote ou d'halogènes ; ces mélanges ne réticulent pas pendant l'opération de séchage (<50°C) effectuée après application de la composition d'émaillage.

Dans ces mélanges, le pourcentage pondéral de groupements « hydroxyl » est compris entre 0,5 et 10% en poids.

La viscosité des solutions des ces polymères à 50% est généralement comprise entre 3000 et 10000 mPa.s à 23°C.
Comme polyhydroxypolyesters, on choisit des polyesters polyols connus, qui sont par exemple basés sur (1) des acides (et anhydrides correspondants) dicarboxyliques aliphatiques, aromatiques ou cycloaliphatiques, et (2) des alcools polyhydriques aliphatiques.
On utilise par exemple des acides dicarboxyliques ayant une masse moléculaire moyenne comprise entre 146 et 150, comme l'acide adipique, l'acide phtalique, tétrahydrophtalique ou hexahydrophtalique ou leurs mélanges.
On utilise par exemple des alcools polyhydriques ayant un poids moléculaire compris entre 62 et 150, comme l'éthylène-glycol, le propylène-glycol, le butane-1,4-diol, l'hexane-1,6-diol, le glycérol, le triméthylol propane ou leurs mélanges.
Ces polyesters polyols sont préparés d'une manière classique à partir de ces acides dicarboxyliques et de ces alcools polyhydriques, et, dans le polyhydroxypolyester, on règle la proportion de groupements « hydroxyl » en fonction de l'excès d'alcool polyhydriques.

Selon l'exemple 1 du document sus-mentionné, on peut ainsi utiliser un liant thermoplastique à 80% d'hydroxypolyacrylate (obtenu par polymérisation radicalaire en présence de di-t-butyl peroxide) et 20% d'hydroxypolyester (obtenu par polymérisation par condensation d'un mélange d'anhydride phtalique, d'acide adipique, de 1,2-propylène glycol avec du trimethylol-propane).

Selon l'exemple 4 du document US 5 325 580, comme liant, on utilise un mélange thermodurcissable de polymères polyhydroxypolyacrylates fonctionnalisés acide et de polymères polyhydroxypolyacrylates fonctionnalisés époxy (ici : glycidyl méthacrylate) ; ce mélange réticule alors pendant l'opération de cuisson (>50°C, en l'occurrence 350°C) effectuée après application de la composition d'émaillage, par réaction des fonctions acides sur les fonctions époxy des polymères.

Comme fritte , on utilise par exemple une base vitreuse adaptée à l'émaillage de tôle et présentant la composition suivante :
- Pour l'émaillage de base, destiné à la première couche au contact du métal : 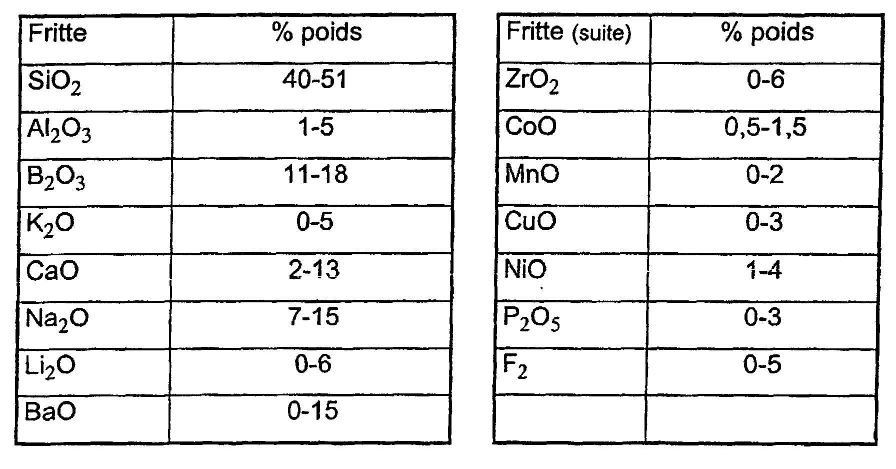
- Pour l'émaillage dit blanc, destiné à la couche de surface, appliquée avant ou après mise en forme :

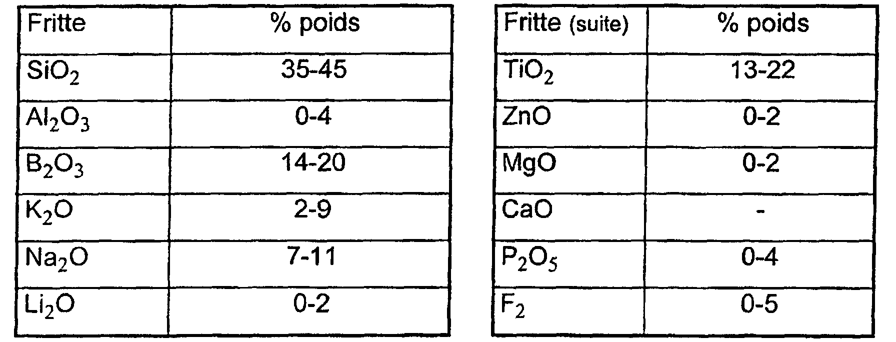

Comme solvant, on utilise par exemple un mélange de xylène et de méthoxypropylacétate, ou un mélange aromatique à haute température d'ébullition comme le produit référencé SOLVESSO 150 de la Société EXXON, ou la cyclohexanone, ou des étheresters de glycol.

Comme agent de tenue en suspension, on utilise par exemple du silicate de magnésium hydraté.

Pour préparer la composition d'application d'émail, on procède par exemple de la manière suivante :
- on chauffe un composant du liant polymère,
- on y ajoute lentement et sous agitation l'agent de tenue en suspension,
- on ajoute ensuite la fritte, puis le solvant avec les agents mouillants, les agents de dégazage et autres additifs,
- on broie le mélange jusqu'à obtenir une dispersion satisfaisante de la fritte d'émail,
- après refroidissement, on ajoute ensuite l'autre composant du liant polymère, par exemple le polyacrylate fonctionnalisé époxy.

L'introduction du liant en deux stades est particulièrement importante dans le cas des liants thermodurcissables, car il s'agit d'empêcher ou de limiter la réticulation du mélange à ce stade de préparation.

Le tableau suivant donne les proportions des principaux constituants de la composition d'application d'émail obtenue :

| *US 5,325,580* : | Exemple 1 | Exemple 4 |
|---|---|---|
| SOLVANT | 16,1% | 23,9% |
| LIANT | 17,1% | 14,0% |
| FRITTE | 63,3% | 56,2% |
| Additifs : | 3,5% | 5,9% |

En exprimant la viscosité de la composition d'application d'émail ainsi obtenue selon la norme DIN 53 211 (en utilisant une coupe consistométrique DIN-4 avec une ouverture de 4 mm), on obtient des temps compris entre 40 et 200 secondes, selon la méthode d'application utilisée et l'épaisseur de couche souhaitée (110 µm par exemple après séchage).

On applique ensuite au rouleau (« roll coater » en langue anglaise) les compositions d'application d'émail obtenues sur des tôles d'acier non traitées, simplement dégraissées.

Pour obtenir des épaisseurs importantes d'émail, on peut appliquer une composition en plusieurs couches successives (2 couches humides de 110 µm d'épaisseur par exemple).

Dans le cas d'un liant thermoplastique polyacrylate-polyester (exemple 1 déjà cité), on sèche ensuite la couche appliquée à température ambiante pendant 1 minute environ.

Dans le cas d'un liant thermodurcissable polyacrylate à base d'un mélange de polymères fonctionnalisés acide et de polymères fonctionnalisés époxy (exemple 4 déjà cité), on cuit ensuite à 350°C pendant environ 30 secondes, ce qui provoque une réticulation du mélange par réaction des fonctions « acide » sur les fonctions « époxy » des deux polyacrylates du liant.

Les tôles d'acier ainsi revêtues de composition d'émaillage (encore à l'état « cru ») sont ensuite mises en forme puis soumises à un traitement de cuisson adapté d'une part pour éliminer, par pyrolyse, le liant organique de la composition sans perturber l'intégrité du revêtement et d'autre part pour cuire et vitrifier l'émail de cette composition.

Ce traitement thermique peut, par exemple, être effectué suivant les caractéristiques suivantes :

| Température ... | 200°C | 300°C | 400°C | 600°C | 820°C |
|---|---|---|---|---|---|
| ..atteinte après : | 2 min. | 4 min. | 5 min. et fin de pyrolyse | 6 min. | 8 min. + maintien 3,5 min. |

On obtient ainsi des pièces formées en tôle émaillée.

Comme liant polymère de composition d'émail, on préfère les liants ou résines thermodurcissables aux liants thermoplastiques, parce qu'ils permettent d'obtenir des revêtements « crus » plus stables ; les tôles ainsi revêtues sont plus résistantes aux solvants ; le revêtement de composition d'émail résiste mieux à l'opération de mise en forme.

Mais l'inconvénient du type de résine thermodurcissable proposée dans le document US 5 325 580 - notamment dans l'exemple 4 - est son manque de stabilité à température ambiante à l'état non réticulé, les groupements hydroxy et époxy ayant tendance à réagir même à température ambiante.

Ce manque de stabilité donne lieu à une évolution de la viscosité qui nécessite des adaptations fréquentes des conditions d'application, notamment dans le cas de l'enduction au rouleau.

L'invention a pour but d'offrir une composition d'application d'émail à liant réticulable, destinée à être appliquée sur tôle avant mise en forme, qui est très stable avant application sur tôle et ainsi beaucoup plus facile à appliquer.

Le document US 5 312 868 décrit une feuille ou un film solide d'application de peinture ou de vernis, qui est exempt de solvant; ce film comprend une résine polymère thermodurcissable et des charges organiques ou minérales, comme des agents de contrôle de la brillance ; ce document décrit également un procédé de revêtement d'un substrat dans lequel on applique cette feuille ou film sur le substrat puis on effectue un traitement thermique du substrat revêtu de manière à réticuler la résine ; dans le cas d'une tôle, on obtient alors un produit comparable à une tôle peinte ou vernie.

Selon les indications portées à la colonne 7, lignes 28 et suivantes, le poids moléculaire moyen (« Mw » abréviation en langue anglaise) de la résine thermodurcissable est supérieur à 100 000, parce que, pour des valeurs inférieures, le revêtement à appliquer est difficile à maintenir à l'état de feuille et risque de se fissurer après application sur le substrat.

Selon une des cinq variantes citées colonne 4, lignes 43 à 48, le film de revêtement comprend des agents de contrôle de la brillance ; parmi les agents de contrôle de brillance cités colonne 15, ligne 56 à colonne 17, ligne 42, on trouve des composants classiques de peinture ou de vernis, comme des granules de pigments colorant organiques ou minéraux, des granules de résine thermodure ou thermoplastique, et des granules d'oxydes métalliques ou de métaux ; parmi les oxydes métalliques, on cite l'alumine, la silice, le verre et même l'émail (« enamel» en langue anglaise).

Après application et cuisson, le substrat obtenu est doté d'un revêtement dont la phase continue, constituée du polymère réticulé, est organique et qui est comparable à une peinture classique ou à un vernis ; à l'évidence, le substrat obtenu serait impropre à l'émaillage vitreux par traitement ultérieur de cuisson de vitrification, même si le film de départ contenait du verre et/ou de l'émail, notamment parce que, dans ce film de revêtement :
- la proportion de verre et/ou d'émail serait insuffisante pour obtenir une couche d'émail de qualité acceptable,
- la présence d'autres composants, organiques ou minéraux, classiques dans le domaine des peintures, nuirait à l'évidence à l'obtention d'une couche d'émail de qualité acceptable.

En particulier, dans le tableau 1 de la colonne 17 de ce document, la proportion de granules de verre dans le film thermodurcissable de départ, qui ne contient pas de solvant, ne dépasse pas 50% ; alors que, dans ce cas d'une composition d'application d'émail comprenant un solvant telle que décrite dans les exemples 1 et 4 déjà cités de US 5 325 580 - BAYER, on aurait, selon le tableau ci-après

| *US 5,325,580* : poids de FRITTE /... | Exemple 1 | Exemple 4 |
|---|---|---|
| .../ poids de la **composition d'application** d'émail : | 63,3% | 56,2% |
| .../ poids du **film** de revêtement (solvant évaporé) : | 75,4% | 73,8% |

Ainsi, la proportion de granules de verre dans un film de revêtement selon US 5,312,868 est très inférieure à celle de fritte d'émaillage vitreux (73,8%) dans un film « cru » de revêtement selon US 5,325,580 .

La caractéristique portant sur le niveau élevé de fritte d'émail vitrifiable dans les compositions d'application d'émail est importante pour limiter la proportion de phase organique dans le revêtement sec, voire réticulé, et pour faciliter l'élimination complète de cette phase organique pendant la cuisson de vitrification, condition nécessaire pour obtenir une couche d'émail vitreux de qualité acceptable.

L'utilisation d'une résine de poids moléculaire moyen élevé dans US 5,312,868, supérieure à 100 000 g/mole, qui est nécessaire pour l'obtention d'un film thermodurcissable manipulable, présente cependant des inconvénients :
- le taux de charge incorporable est limité, à cause de problèmes de mouillabilité des charges dans la résine, notamment dans le cas des charges minérales comme les frittes d'émail,
- l'adhérence au substrat n'est pas suffisante, même après réticulation, pour résister à des opérations de mise en forme ultérieures, à cause de problèmes de mouillabilité du substrat par la résine.

La solution à ces problèmes, qui consisterait à chauffer la composition d'application d'émail pour abaisser sa viscosité, pose d'autres problèmes:
coûts des installations de chauffage et de sécurité, risques de réticulation prématurée.

L'invention a également pour but d'offrir une composition d'application d'émail sur une tôle qui, bien qu'incorporant plus de 50% en poids de fritte d'émail :
- reste suffisamment fluide pour mouiller à la fois la fritte d'émail et la tôle, pour être facile à appliquer sur la tôle, notamment par enduction au rouleau,
- donne, après application et réticulation, un revêtement suffisamment adhérent à la tôle pour résister à des opérations de mise en forme ultérieures.

A cet effet, l'invention a pour objet une composition liquide d'application d'émail vitreux du type comprenant principalement une résine polymère thermodurcissable, un solvant de ladite résine et plus de 50% en poids de fritte d'émail vitrifiable, caractérisée en ce que ladite résine comprend :
- un ou plusieurs polymères polyhydroxypolyesters et/ou un ou plusieurs polymères polyhydroxypolyacrylates en solution et/ou en émulsion, présentant un indice OH (ou « hydroxy ») compris entre 3 et 100 mg KOH par gramme, adaptés pour que le poids moléculaire moyen de la fraction solubilisée desdits polymères soit inférieur à 100 000 g/mole,
- au moins un agent de réticulation adapté pour réagir avec les fonctions « hydroxy » desdits polymères par transestérification ou par polyaddition, en quantité suffisante pour réticuler ladite résine,
- une quantité de catalyseur suffisante pour catalyser la réaction des groupements hydroxy desdits polymères et de l'au moins un agent de réticulation.

D'autres caractéristiques avantageuses de la composition selon l'invention sont définies dans les revendications dépendantes.

L'une de ces caractéristiques concerne l'utilisation d'un composé aminoplaste comme agent de réticulation ; cette caractéristique est avantageuse parce que les compositions réticulées à partir de cet agent présentent de meilleures propriétés mécaniques et résistent mieux à la mise à la mise en forme que les compositions qui sont réticulées à l'aide d'un isocyanate bloqué; par ailleurs, les composés aminiplastes sont plus économiques que les isocyanates bloqués.

L'invention a également pour objet un procédé de production d'une tôle revêtue d'émail vitrifiable comprenant les étapes consistant à :
- préparer une composition d'application d'émail vitreux selon l'invention,
- appliquer ladite composition sur la tôle à revêtir,
- cuire la tôle ainsi revêtue de ladite composition dans des conditions adaptées pour faire réticuler ladite résine.

En fin d'application et/ou endébut de cuisson, le solvant contenu dans ladite composition est éliminé par évaporation.

De préférence, l'application de ladite composition en réalisée par enduction.

On obtient alors un tôle « pré-émaillée », qui peut être mise en forme avant cuisson de vitrification de la fritte.

L'invention a également pour objet un procédé de production d'une tôle revêtue d'émail vitrifié caractérisé en ce qu'il comprend une étape de cuisson de vitrification d'une tôle revêtue d'émail vitrifiable obtenue par le procédé ci-dessus.

L'invention a également pour objet un procédé de production d'une pièce formée en tôle émaillée comprenant les étapes consistant à :
- préparer une composition d'application d'émail vitreux selon l'invention,
- appliquer ladite composition sur une tôle,
- cuire la tôle ainsi revêtue de ladite composition dans des conditions adaptées pour faire réticuler ladite résine,
- mettre en forme la tôle revêtue de ladite composition réticulée, dans la forme de ladite pièce à produire,
- cuire la pièce formée revêtue de ladite composition réticulée dans des conditions d'une part adaptées pour obtenir une pyrolyse complète de ladite résine réticulée, d'autre part adaptées pour vitrifier ladite fritte vitrifiable.

De préférence, l'application de ladite composition en réalisée par enduction.

Ainsi, en récapitulant, l'invention a pour premier objectif la préparation d'une tôle revêtue d'une composition préparée à partir d'une ou plusieurs résines thermodurcissables, d'un ou plusieurs solvants et d'une fritte d'émail vitrifiable ; cette composition est applicable facilement sur la tôle à l'état liquide, de préférence en continu ; elle est réticulée par cuisson ; l'épaisseur appliquée, mesurée après cuisson de réticulation, peut être supérieure à 100 µm ; la cohésion entre la tôle et la ou les couches de composition réticulées est suffisamment forte pour permettre la mise en forme de la tôle revêtue par emboutissage, sans risque de dégradation ni de dé-cohésion.

La cuisson des pièces éventuellement mises en forme est ensuite effectuée dans des conditions contrôlées, pour permettre l'élimination complète de la partie organique de la composition, ainsi que la vitrification de la fritte d'émail de manière à former une phase vitreuse continue ; ainsi, l'invention a pour deuxième objectif la préparation de pièces en tôle émaillées, au sens de pièces revêtues d'émail vitreux comprenant une phase vitreuse continue.

L'invention sera mieux comprise à la lecture de la description qui va suivre, donnée à titre non limitatif.

On prépare d'une manière classique une composition d'émaillage à partir des composants principaux suivants : liant à base de résine polymère thermodurcissable, solvant de la résine, et fritte d'émail vitrifiable en proportion pondérale supérieure à 50%.

Selon l'invention, la résine polymère thermodurcissable comprend :
- un ou plusieurs polymères polyhydroxypolyesters et/ou un ou plusieurs polymères polyhydroxypolyacrylates préparés de manière à présenter :
   - un indice OH (ou « hydroxy ») compris entre 3 et 100 mg de KOH par gramme de résine, de préférence entre 3 et 40 mg KOH/g,
   - un poids moléculaire moyen inférieur à 100 000 g/mole,
   - au moins un agent de réticulation adapté aux fonctions « hydroxy » desdits polymères, en quantité suffisante pour réticuler ladite résine,
   - une quantité de catalyseur suffisante pour catalyser la réaction des groupements hydroxy desdits polymères et de l'au moins un agent de réticulation.

Les résines de polyester utilisées pour l'invention sont des résines sans huile préparées conformément aux méthodes connues (se rapporter par exemple au document EP-A-237 749) par réaction dans la masse fondue ou dans des solvants organiques à des températures généralement comprises entre 200 et 260°C.

On utilise de préférence des solutions de résines de polyester qui présentent une viscosité comprise entre 2,5 et 5,5 Pa.s mesurée conformément à la norme DIN 53 214.

Pour la fabrication de ces résines de polyester, on peut utiliser les matières premières classiques utilisées pour la fabrication de résines de polyester, les proportions de chacun des composants étant à choisir à chaque fois de sorte que la résine obtenue de polyester présente les caractéristiques citées, notamment au niveau de l'indice OH.

Comme composants « acides », on peut utiliser, seuls ou en mélange :
- des acides dicarboxyliques et/ou polycarboxyliques aromatiques comme par exemple : l'acide phtalique, l'acide téréphtalique, l'acide isophtalique, l'acide trimellitique et l'acide pyromellitique.
- des acides dicarboxyliques et polycarboxyliques aliphatiques comme par exemple : l'acide succinique, l'acide glutarique, l'acide adipique, l'acide pimélique, l'acide subérique, l'acide azélaïque, l'acide sébacique, l'acide 2-éthylhexanecarboxylique, l'acide isononanoïque ; on peut aussi utiliser conjointement des acides carboxyliques insaturés, par exemple l'acide maléique, l'acide fumarique, l'acide itaconique, l'acide citraconique.
- des acides dicarboxyliques et polycarboxyliques cycloaliphatiques comme par exemple : l'acide tétrahydrophtalique, l'acide hexahydroxyphtalique, l'acide 1,4-cyclohexanedicarboxylique, l'acide méthylcyclohexanedicarboxylique .
- des acides monocarboxyliques aromatiques comme par exemple : l'acide benzoïque, des acides benzoïques substitués en alkyle, des acides naphténiques et leurs isomères, l'acide abiétique et ses isomères, l'acide benzoïque étant utilisé de préférence.

On obtient des résines de polyester particulièrement préférées en utilisant l'acide téréphtalique ou des mélanges d'acide téréphtalique et d'acide adipique, le cas échéant conjointement à des acides monocarboxyliques.

Les acides carboxyliques cités pour la fabrication des résines de polyester peuvent être utilisés soit sous la forme d'acides libres, soit sous la forme de leurs dérivés (par exemple anhydrides, esters).

Comme composants « alcool », on peut utiliser, seuls ou en mélange, des diols et/ou des polyols linéaires ou ramifiés, aliphatiques et/ou aromatiques et/ou cycloaliphatiques.

On utilise de préférence des diols et/ou des polyols aliphatiques comme des glycols, par exemple l'éthylèneglycol, le propylèneglycol, le néopentylglycol, le butane-1,4-diol, l'hexane-1,6-diol, le 2,2,4-triméthylpentane-1,3-diol, le diéthylèneglycol, le triéthylèneglycol, ou encore des triols et des polyols, par exemple le triméthyloléthane, le triméthylolpropane, la glycérine, la glycérine éthoxylée et la glycérine propoxylée, le pentaérythritol, le dipentaérythritol, le ditriméthylolpropane, le mannitol et le sorbitol.

Pour l'invention, on peut également utiliser des résines commerciales de polyester présentant les caractéristiques suivantes :
- polyester linéaire ou branché,
- masse moléculaire moyenne M, mesurée par chromatographie de perméation de gel, inférieure à 100 000 g/mole, de préférence comprise entre 10 000 et 25 000 g/mole.
- indice OH compris entre 3 et 100 mg KOH/g, de préférence compris entre 3 et 40 mg KOH/g.

Les résines de polyacrylates utilisées pour l'invention sont préparées conformément aux méthodes classiques par co-polymérisation d'un monomère acrylique contenant des groupements hydroxyles avec un ou plusieurs monomères insaturés polymérisables de manière radicalaire.

Des exemples de monomères appropriés, contenant des groupements hydroxyles, sont les esters hydroxyalkyles en C2 - C8 de l'acide acrylique et de l'acide méthacrylique, comme par exemple l'acrylate d'hydroxyéthyle, le méthacrylate d'hydroxyéthyle, l'acrylate d'hydroxypropyle, le méthacrylate d'hydroxypropyle et l'acrylate et/ou le méthacrylate de 2-éthylhexyle ; ces monomères contenant des groupements hydroxyles peuvent être utilisées soit individuellement soit en tant que mélange de deux ou de plusieurs d'entre eux.

Tous les composants quelconques ayant une liaison éthyléniquement insaturée copolymérisable de manière radicalaire peuvent être utilisés en tant que monomère, s'ils sont copolymérisables avec le monomère contenant des groupement hydroxyles ; ces composants sont choisis d'une manière connue en elle-même en fonction des propriétés souhaitées du copolymérisat d'acrylate ; des exemples représentatifs de monomères de ce genre sont, entre autres, des esters alkyles de l'acide acrylique et de l'acide méthacrylique, des composés vinylaromatiques, des acides carboxyliques insaturés en α, β, des amides de l'acide acrylique ou de l'acide méthacrylique ; des détails supplémentaires relatifs à ces monomères et aux conditions de préparation appropriées figurent dans le document DE-PS-32 01 749, pages 3 à 5.

Pour l'invention, on peut également utiliser des résines commerciales de polyacrylates présentant les caractéristiques suivantes :
- masse moléculaire moyenne M inférieure à 100 000 g/mole , de préférence inférieure ou égale à 5000 g/mole dans le cas de résines préparées en phase solvant.
- indice OH compris entre 3 et 100 mg KOH/g, de préférence compris entre 3 et 40 mg KOH/g.

Selon une variante, on peut utiliser des résines commerciales préparées en émulsion aqueuse ; dans ce cas, la masse moléculaire de ces résines est de préférence supérieure ou égale à 100 000 g/mole.

Comme agent de réticulation adapté aux fonctions « hydroxy » des polymères de la résine, on utilise de préférence un isocyanate bloqué ou un composé aminoplaste.

Comme isocyanate bloqué, on peut utiliser, seuls ou en mélange, un diisocyanate, un triisocyanate linéaire ou cyclisé (isocyanurate), un biuret, des polyisocyanates, des prépolymères ou des adducts.

On entend par « adduct » un produit de réaction d'un isocyanate avec un produit comportant un atome d'hydrogène actif.

De préférence, l'isocyanate ou le mélange d'isocyanates est adapté pour présenter une teneur pondérale en radicaux NCO comprise entre 10 et 25% par rapport au poids total sec d'agent de réticulation.

On ajoute l'isocyanate ou le mélange aux compositions d'émaillage de préférence dans une quantité telle que le rapport d'équivalence des groupements OH du liant (somme des groupements OH des polymères polyesters et/ou polyacrylates et , le cas échéant, de ceux des autres composants du liant contenant des groupements hydroxyles) aux groupements NCO de l'agent de réticulation soit compris entre 0,5 et 2,5.

Comme exemple d'isocyanate bloqué, on peut citer les mélanges polyisocyanates bloqués tels que décrits dans les documents FR 2 544 322, US 3 577 493, EP 251 267 ou JP 02 097536 A.

Le caractère « bloqué » peut être obtenu par des agents de blocage ; comme agent de blocage, on peut choisir, par exemple, un phénol, un polypropylèneglycol, un oxime, comme le méthyl-éthyl-cétoxime, l'acétone oxime, le cyclohexyl oxime, la butanone oxime, un triazole, comme le benzotriazole, un caprolactame, comme le ε-caprolactame, un composé β-dicarbolyl, comme l'acétoacétate d'éthyle ou le malonate d'éthyle, ou aussi le diester malonique, un carbodiimide ou le N-hydroxy-succinimide, ou aussi, l'adduct du triméthylolpropane bloqué caprolactame.

Le caractère « bloqué » peut être obtenu par la nature même de l'isocyanate, qui est dit alors « autobloqué» ; comme exemple d'isocyanate autobloqué, on peut choisir un isocyanate dimérisé, ou, dans la famille des IPDI, l'urétidione de l'IPDI.

Des exemples de diisocyanates et de polyisocyanates appropriés aliphatiques et cycloaliphatiques sont le diisocyanate d'hexaméthylène, le diisocyanate de décaméthylène, le diisocyanate d'isophorone, le diisocyanate de dicyclohexylméthane-4,4', le diisocyanate de lysine, le bis-4-crocyanatocyclohexylméthane (H₁₂MDI), le tétraméthyl-m-xylidène diisocyanate (TMXDI), ainsi que des dérivés dimérisés et trimérisés de ces diisocyanates.

On peut également utiliser des diisocyanates et des polyisocyanates aromatiques comme le diisocyanate de diphénylméthane-4,4' (MDI), le diisocyanate de diphénylène-4,4', le diisocyanate de diphénylène-4,4', le diisocyanate de 2,4-tolylène (TDI) et le diisocyanate de 2,6-tolylène (TDI), le diisocyanate de m-phénylène, le diisocyanate de p-phénylène, le diisocyanate de 1,5-naphtalène, le diisocyanate de 3,3'-diméthyl-4,4'-biphénylène, le diisocyanate de 3,3'-diméthoxy-4,4'-biphénylène, le diisocyanate de 3,3'-diphényle-4,4'-biphénylène, le diisocyanate de 4,4'-biphénylène, le triisocyanate de 1,3,5-benzène, le triisocyanate de para, para', para"'-triphénylméthane et le diisocyanate de xylylène.

Comme isocyanate bloqué, on peut également prendre un produit commercial, comme par exemple :
- de la Société BAYER, les produits DESMODUR ® référencés BL 3175, LS 2759, TPLS 2957 à base HDI ; BL 4165 et LS 2078 à base IPDI ; TPLS 2117 à base H₁₂HDI ; et BL 1265 à base TDI ;
- de la Société CREANOVA (anciennement HÜLS), les produits VESTANAT ® référencés EPB 1481 à base IPDI ; B 1370 et FPB 1186A.
- de la Société RHODIA (anciennement RHONE-POULENC) : le TOLONATE ® référencé D2, à base HDI.

Le composé aminoplaste est choisi de préférence dans le groupe comprenant les composés alkylés d'urée-aldéhyde, de mélamine-aldéhyde, de dicyandiamide-aldéhyde, et de triazine-aldéhyde ; l'alkylation est réalisée par exemple avec un alcool comme le méthanol ou le butanol.

Les aldéhydes utilisées en réaction avec le composé aminé sont, par exemple, le formaldéhyde, l'acétaldéhyde, et l'acroléine ou des précurseurs d'aldéhyde comme le paraformaldéhyde et l'hexaméthylènetetramine.

D'autres exemples de composés aminoplastes sont décrits dans le document US 3 804 920.

De préférence, on utilise des dérivés de mélamine ayant au moins quatre groupements du type : 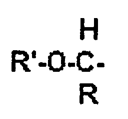 attachés au groupement amino de la structure mélamine, où R est un atome d'hydrogène ou un radical alkyl monovalent contenant de 1 à 5 atomes de carbone et R' est un groupe alkyl contenant de 1 à 6 atomes de carbone.

De préférence, on utilise l'hexaméthoxyméthyl mélamine comme composé aminoplaste.

De préférence, la quantité d'aminoplaste ajoutée est adaptée pour que le rapport de la masse de résine par la masse de composé aminoplaste soit compris entre 1,5 et 15.

Le catalyseur est ajouté au liant de la composition d'émaillage pour favoriser une réticulation rapide dans les conditions industrielles, après application de cette composition sur la tôle à émailler ; le choix du catalyseur est adapté d'une manière connue en elle-même , en nature et en proportion, à la nature de l'agent de réticulation :
- dans le cas des isocyanates, on peut prendre par exemple un catalyseur à base de dibutyllaurate étain (DBTL),
- dans le cas des aminoplastes, on peut prendre par exemple un catalyseur à base d'acide paratoluène sulfonique bloqué (APTS).

Pour la préparation de la composition d'émaillage selon l'invention, on utilise indifféremment dans le liant des polymères polyhydroxypolyesters ou des polymères polyhydroxypolyacrylates ou un mélange de polymères polyhydroxypolyesters et de polymères polyhydroxypolyacrylates, du moment que l'indice OH (ou « hydroxy ») reste compris entre 3 et de 100 mg KOH/g, de préférence entre 3 et 40 mg KOH/g.

Le système thermodurcissable obtenu ne contient pas de fonctions « époxy » mais est donc réticulable par réaction de transestérification dans le cas de l'utilisation des composés aminoplastes comme agent de réticulation, ou par réaction de polyaddition dans le cas de l'utilisation des isocyanates bloqués comme agent de réticulation.

Comme fritte d'émail vitrifiable, on utilise les mêmes frittes de base (dites de « masse ») ou de couverte que celles habituellement utilisées pour l'émaillage sur tôles d'acier nu lorsque l'application de l'émail est réalisée après la mise en forme des tôles.

Les tableaux ci-dessous indiquent les compositions usuelles de frittes :
- Pour l'émail de base, destiné à la première couche adhérente appliquée au contact du métal : 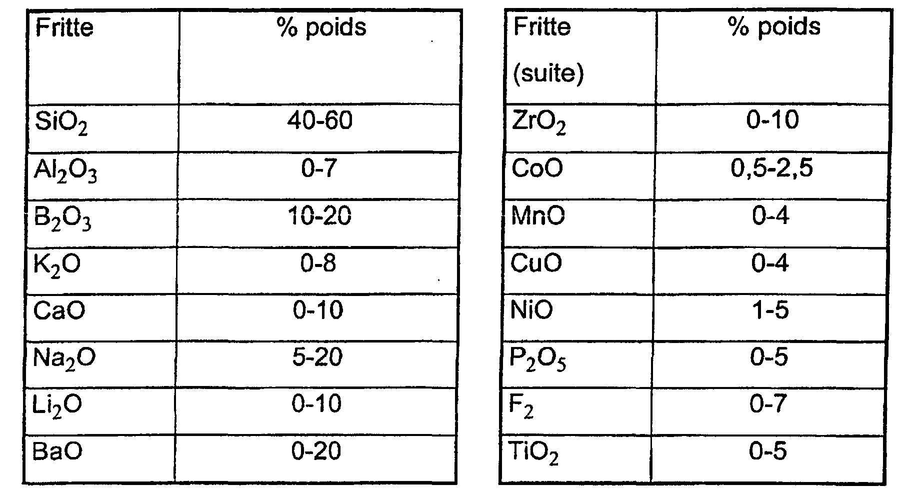
- Pour l'émail blanc, destiné à la couche de surface, appliquée avant ou après mise en forme

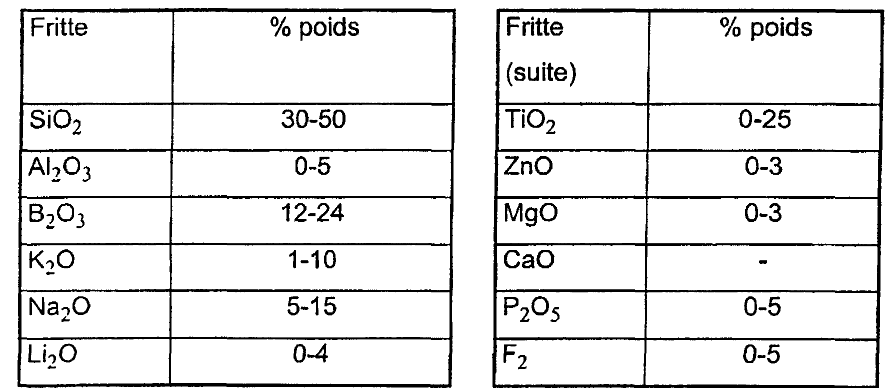

La composition d'émaillage contient en général des additifs classiques, en proportion inférieure à 10% en poids, par exemple des agents de dispersion, des agents anti-sédimentation, des agents nivelants, des agents anti-mousse, des agents de stabilisation et des agents mouillants.

Les agents anti-sédimentation sont particulièrement importants ici pour la stabilité au stockage et dans les cuves d'alimentation des moyens d'enduction, notamment parce que les compositions d'émaillage sont fortement chargées en matières solides.

Le choix du solvant est adapté d'une manière connue en elle-même pour obtenir un bon pouvoir solvant vis à vis des composants du liant.

La proportion de solvant par rapport au poids total de composition d'émail est en général inférieure ou égale à 25% ; cette proportion doit être adaptée en fonction des critères spécifiques de viscosité propre à la méthode d'application de la composition d'émaillage.

Pour ajuster la viscosité de la composition d'application d'émail, on peut utiliser des hydrocarbures aliphatiques et/ou aromatiques, comme par exemple le solvant Naphta®, divers types de Solvesso® et de Shellsol®, le xylène, ou des esters, comme par exemple l'acétate de méthoxypropyle, et l'acétate de butylglycol, ou encore des cétones comme par exemple la cyclohexanone.

Lorsqu'on applique la composition d'émaillage au rouleau (« coil-coating » en langue anglaise), on choisit de préférence un solvant dont le point d'ébullition est compris entre 120°C et 200°C, ce qui correspond à un critère industriel classique pour ce type d'application.

Pour préparer la composition d'émaillage, on procède par mélange et/ou dispersion de ses composants et additifs.

Ainsi, les polymères de la résine étant en solution et/ou en émulsion dans un solvant, on disperse la fritte d'émail dans cette solution ou émulsion sous agitation à température ambiante, on ajoute ensuite à la suspension obtenue les autres composants, à savoir l'agent de réticulation, le catalyseur et les autres additifs.

On choisit la nature et la proportion des polymères en solution de manière à ce que la masse moléculaire moyenne du mélange de ces polymères soit inférieure à 100 000 g/mole, de préférence inférieure à 50 000 g/mole.

Dans le cas où une fraction des polymères du mélange est en émulsion, voire la totalité, il est préférable que la masse moléculaire moyenne de cette fraction en émulsion soit supérieure ou égale à 100 000 g/l.

Le cas échéant, à l'aide d'un solvant, on dilue le mélange obtenu, notamment pour ajuster la viscosité en fonction du mode d'application envisagé.

La composition d'application d'émail obtenue contient toujours un solvant, qu'il s'agisse du solvant rajouté pour la dilution et/ou du solvant des produits polymères de départ, lorsqu'ils sont en solution ou en émulsion ; la composition d'application d'émail obtenue est donc liquide à température ambiante.

Les proportions de liant, de solvant et de fritte sont adaptées pour que la teneur pondérale en fritte reste supérieure à 50% du poids total de composition d'application d'émail ; grâce au type de liant utilisé et malgré la charge important de fritte, on constate que la fritte est convenablement mouillée. Cette composition d'émaillage est particulièrement stable à température ambiante, de sorte qu'on peut l'utiliser sans précautions particulières pour alimenter des installations industrielles d'application sur tôles métalliques :
- elle est stable physiquement car la matière solide reste dispersée de manière homogène et stable en suspension dans cette composition,
- elle est stable chimiquement car, grâce au choix du mode de réticulation (via les groupement hydroxy uniquement, contrairement au document US 5 325 580) et des agents de réticulation, il n'y a pas de réaction de réticulation à cette température ; de plus, la viscosité de cette composition est stable et n'évolue pas en fonction du temps, ce qui facilite le contrôle des conditions d'application.

Pour appliquer cette composition d'émail en continu sur des bandes de tôles, on procède de préférence par enduction, à l'aide, de préférence d'une installation d'application au rouleau ; on utilise par exemple la méthode dite « reverse coil-coating » en langue anglaise.

Grâce au type de liant utilisé et malgré la charge important de fritte, on constate que la viscosité de la composition d'application d'émail obtenue reste suffisamment faible pour pouvoir l'appliquer facilement sur tôle par enduction.

La composition selon l'invention peut être avantageusement utilisée pour la production de pièces formées en tôle émaillée de la manière suivante :
- avant mise en forme, on applique cette composition sur la tôle, puis on cuit la tôle ainsi revêtue dans des conditions adaptées pour faire réticuler le liant polymère de cette composition,
- on met ensuite en forme la tôle revêtue de cette composition réticulée, dans la forme souhaitée de la pièce émaillée à produire ; grâce au type de liant utilisé et malgré la charge important de fritte, on constate que le revêtement de composition réticulée adhère suffisamment à la tôle pour résister à l'opération de mise en forme.- on cuit ensuite la pièce formée dans des conditions d'une part adaptées pour obtenir une pyrolyse complète du polymère réticulé de la composition de revêtement, d'autre part adaptées pour obtenir la vitrification de l'émail de cette composition.

Selon ce mode de production de pièces émaillées :
- avant application de la composition d'émaillage, on effectue généralement un traitement de dégraissage de la tôle ; de préférence, on effectue ensuite un traitement de phosphatation de la tôle pour améliorer l'adhérence de l'émail, en évitant tout rinçage chromique pour éviter la pollution par le chrome au cours de la vitrification de l'émail.
- on peut appliquer la composition d'émaillage en plusieurs couches ; on peut appliquer une autre composition d'émaillage après la mise en forme, mais avant la cuisson de vitrification.
- de façon optimale, pour la cuisson de vitrification de la pièce formée, il convient de séparer l'étape de pyrolyse des produits organiques (résine) de l'étape de fusion de vitrification des produits minéraux (frittes).

En ce qui concerne ce traitement thermique de cuisson de vitrification, dans la pratique, on ménage, dans le profil thermique de montée en température, un palier de pyrolyse d'une durée comprise entre 15 secondes et 4 minutes à une température comprise entre 350 et 550°C, et de préférence de 1 à 2 minutes entre 400 et 500°C, ce qui permet de brûler efficacement la résine sans perturber la fusion de la fritte d'émail, puisque la température reste alors inférieure à la température de transition vitreuse de la fritte.

La combustion de la résine est facilitée par le maintien d'une atmosphère oxydante dans la zone du four de cuisson correspondant à ce palier ; à cette fin, on peut ajouter dans cette zone un dispositif additionnel de brûleurs à flamme directe, ce qui permet un bon contrôle simultané de la température et de l'atmosphère de combustion dans cette zone.

Dans le cas de tôles métalliques en acier, dans la zone de fusion de l'émail qui suit la zone de pyrolyse du liant, la température est comprise entre 500 et 900°C, de préférence entre 560°C et 850°C, les températures les plus basses étant plutôt réservées aux émaux en contact avec des surfaces à bas point de fusion telles que celles riches en aluminium comme pour les tôles aluminiées.

La détermination précise des conditions détaillées de la cuisson vitrification résulte d'expérimentations qui tiennent compte en particulier du ratio entre la capacité d'évacuation des fumées et le débit de pièces à émailler de façon à obtenir des produits finis exempt de défauts d'aspect et présentant une bonne adhérence de l'émail sur la tôle.

Dans la mise en oeuvre du procédé de production de pièces formées en tôle émaillée qui vient d'être décrit, on constate :
- au niveau de la mise en forme, que le revêtement réticulé de composition d'émaillage selon l'invention présente une grande souplesse qui autorise de fortes déformations de tôle sans risque de dégradation ; le degré de réticulation de la résine peut néanmoins être adapté selon la souplesse requise et notamment, de manière à obtenir une température de transition vitreuse de la composition réticulée proche de la température ambiante, de préférence proche de 35°C environ ;
- au moment de la cuisson de vitrification, que le revêtement de composition d'émail peut être pyrolysé à grande vitesse sans provoquer de défauts d'aspects de surface sur la tôle émaillée ; cet avantage permet d'améliorer la productivité des installations de cuisson.

Cette grande souplesse pour la mise en forme et cette grande vitesse de pyrolyse pour la cuisson résultent de la nature des résines employées dans la composition d'émaillage selon l'invention.

Les compositions d'émaillage selon l'invention, prévues pour être appliquées avant mise en forme, sont destinées à la réalisation de toutes les pièces de forme habituellement produites par émaillage sur tôles, pour lesquelles les dépôts d'émaux étaient jusqu'ici réalisés après mise en forme.

Elles s'appliquent aussi bien sur aciers nus (tôles à chaud et tôles à froid) que sur aciers revêtus, notamment revêtus de dépôts riches en aluminium.

Elles permettent notamment de produire des pièces destinées aux marchés suivants :
- gros électroménager, pour des pièces de four, table de cuisson, pour des couvercles, des bandeaux de cuisinières et des lèche-frite.
- petit électroménager, pour des pièces de minifours, de fours micro-ondes, de fers à repasser, de bouilloires, de gaufriers, de raclettes, et de pierrades, ainsi que pour des articles ménagers comme des casseroles, des poêles, des faitouts , et des assiettes.
- bâtiment, pour des bardages extérieurs, des parois intérieures, et des panneaux architecturaux ou de décoration.
- sanitaire, pour des baignoires, des bacs à douches, des éviers, des pièces de chauffe -eau.

Selon une variante préférée de l'invention, pour la préparation de la composition d'application d'émail, on utilise au moins un polymère (hydroxypolyester et/ou hydroxypolyacrylate) qui présente un indice COOH supérieur ou égal à 5 mg d'équivalent KOH par gramme dudit polymère.

On améliore ainsi le pouvoir mouillant de la composition d'émaillage, ce qui facilite son application, et on améliore également l'adhérence de cette composition réticulée à la tôle, ce qui limite encore le risque de dégradation au moment de la mise en forme.

Selon une autre variante préférée de l'invention, la composition d'application d'émail comprend, outre les additifs classiques déjà mentionnés pour sa préparation, des additifs de lubrification qui facilitent l'emboutissage de la tôle revêtue de cette composition réticulée, ce qui limite encore le risque de dégradation à l'étape de mise en forme.

Comme additif de lubrification, on utilise de préférence une cire de polyéthylène, par exemple une cire synthétique, préparée par polymérisation d'éthylène de façon à obtenir un bas poids moléculaire, par exemple compris entre 1000 et 3000 g/mole ; on peut également utiliser des variantes à cet homopolymère, comme une cire de polyéthylène oxydée, un copolymère d'éthylène et d'acide acrylique, ou un copolymère d'éthylène et d'acétate de vinyle.

Un avantage de la cire de polyéthylène sur d'autres additifs de lubrification est d'être facilement éliminable par pyrolyse au moment de la cuisson de vitrification de l'émail.

L'ajout de 1% environ en poids de cet additif de lubrification par rapport au poids total de composition convient pour obtenir une amélioration sensible de la lubrification au moment de la mise en forme ; cet additif est ajouté par simple mélange sous agitation à la composition d'émaillage.

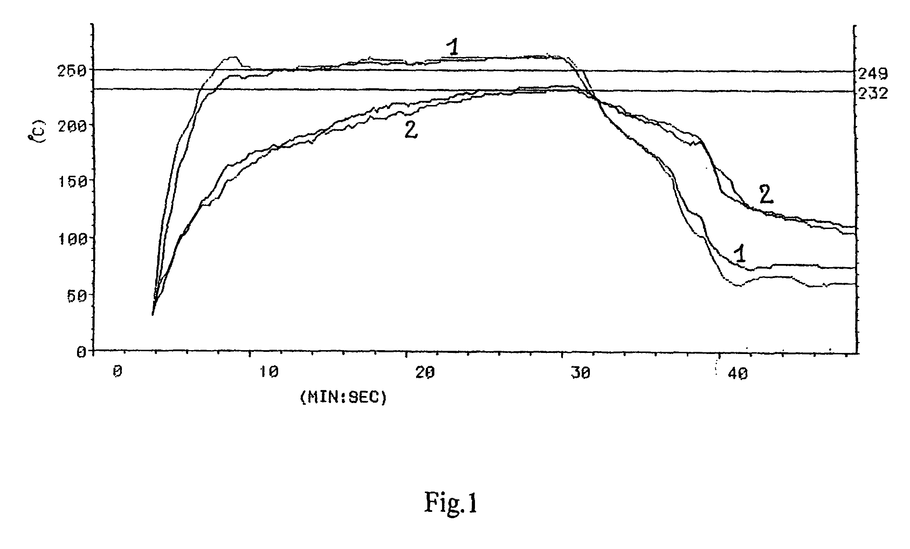

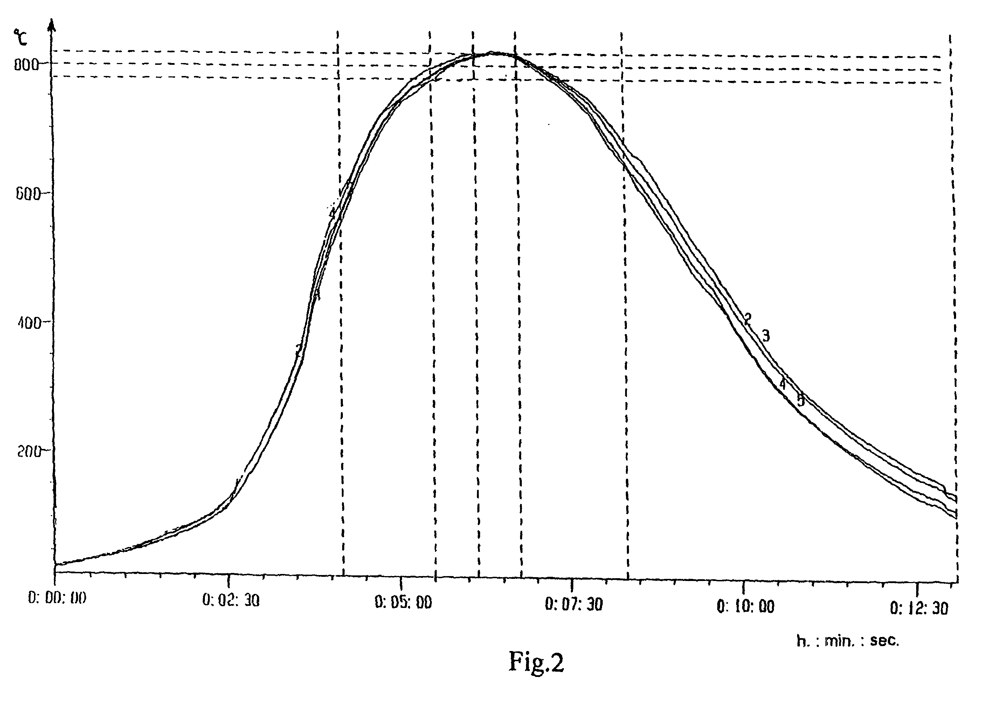

D'autres avantages du procédé de l'invention apparaîtront à la lecture des exemples présentés ci-après à titre non limitatif de la présente invention et en référence aux figures 1 et 2 :
- la figure 1 donne le profil thermique (température en fonction du temps) du traitement de séchage et de réticulation après application d'une composition d'émaillage selon l'invention ; les courbes référencées 1, très voisines, donnent la température de l'atmosphère de traitement et les courbes référencées 2, très voisines donnent la température de l'échantillon en cours de traitement.
- la figure 2 donne le profil thermique (température en °C en fonction du temps en h:min.:sec.) du traitement de cuisson-vitrification après mise en forme d'une tôle revêtue d'une couche réticulée d'une composition d'émaillage selon l'invention ; les courbes 2, 3, 4 et 5 représentent quatre enregistrements différents pour le même profil thermique programmé.

### PRODUITS utilisés pour la préparation des échantillons de pièces émaillées :

Comme substrat d'émaillage, on prend une tôle d'acier laminé à froid, d'épaisseur 0,8 mm, référencé commercialement SOLEMA de la Société SOLLAC.

Les composants utilisés pour la préparation des compositions d'émaillage sont décrits ci-après :
1- résines commerciales à base d'hydroxypolyesters et proportions :

| Société : | CREANOVA (anciennement HÜLS) | | |
|---|---|---|---|
| Référence commerciale : | Dynapol LH 818-02 | Dynapol L 205 | LTW |
| Type de polyester | branché | linéaire | linéaire |
| Masse moléculaire moyenne | 600 g/mole | 15000 g/mole | - |
| Indice OH (g. KOH/g) (1) | 15 à 25 | 4 à 10 | ≈ 30 |
| Indice COOH (g. KOH/g) (2) | < 3 | < 3 | 20 à 30 |
| Proportions / total résine (3) : | 83% | 12% | 5% |

| | | | |
|---|---|---|---|
| (1) mesuré selon la norme ISO 4629 - | | | |
| (2) mesuré selon la norme ISO 2114. | | | |
| (3) sauf pour l'essai n°1 : idem en proportions, mais sans résine LTW. | | | |

2- agent de réticulation et proportion par rapport au poids total de composition d'émail : 1% d'un composé aminoplaste référencé CYMEL ® 303, de la Société CYTEC (anciennement DYNO CYANAMID).
3- catalyseur et proportion par rapport au poids total de composition d'émail : 1% d'acide paratoluène sulfonique (APTS) bloqué par une amine.
4- Fritte pour émaillage de tôle, référencée PM 15/2611 de la Société PEMCO, présentant la composition suivante : 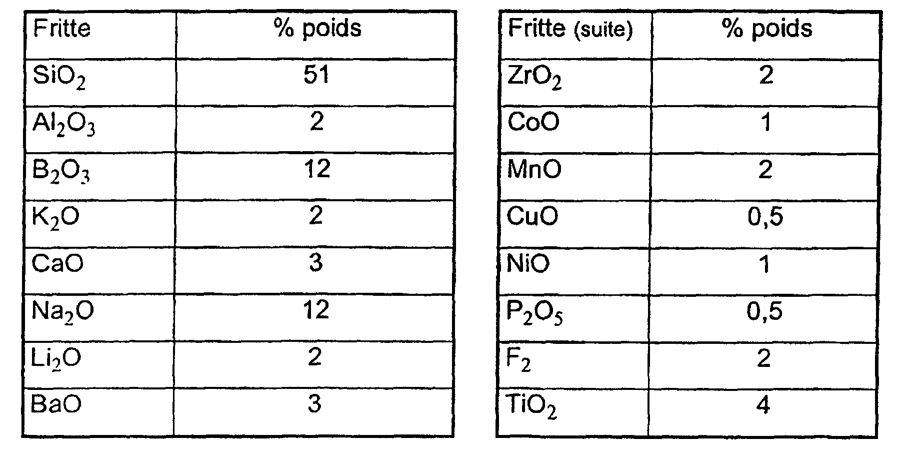
Il s'agit ici d'une fritte pour émaillage de masse en poudre non enrobée, dite antiacide, c'est à dire notée A à l'issue du test à l'acide citrique à température ambiante défini par la norme ISO 2722.
5- Additifs et proportion par rapport au poids total de composition d'émail :
5.1 : agent de dispersion et mouillant : 0,1 % du produit dénommé Bykumen ® de la Société BYK ; il s'agit d'un surfactant anionique formulé principalement à l'aide d'un polyester acide insaturé et d'un acide carboxylique.
5.2 : agent anti-sédimentation : 0,3 % du produit dénommé AEROSIL ® 380 de la Société DEGUSSA ; il s'agit de silice pyrogénée.
5.3 : agent de lubrification (option) : 1% du produit LUBA-print ® de la Société BADER : il s'agit essentiellement d'une solution organique contenant 9 à 11 % en poids de cire de polyéthylène.

6- Solvant : essentiellement du SOLVESSO® 150 et des esters ; le point éclair des compositions d'émail obtenues est de l'ordre de 25°C.

### MÉTHODES utilisées pour la préparation des pièces formées émaillées :

1. Préparation du substrat de tôle d'acier : dégraissage alcalin, rinçage et phosphatation amorphe au fer, à l'aide d'une solution de phosphatation commerciale référencée BONDERITE 901 de la Société CHEMETALL.
2. Préparation de la composition d'émaillage, à appliquer sur le substrat - proportions des composants principaux - caractéristiques obtenues :
2.1 : mode opératoire :
   - on mélange les résines commerciales,
   - on disperse la fritte d'émail dans ce mélange sous agitation à température ambiante,
   - on ajoute ensuite à la suspension obtenue l'agent de réticulation, puis le catalyseur et les autres additifs dans les proportions indiquées ci-dessus,
   - on dilue avec le solvant.

2.2 : proportions en % par rapport au poids total de composition, selon le tableau ci-après :

| Essai | Total résines | Fritte | Agent lubrifiant | Solvant |
|---|---|---|---|---|
| n°1 | 15% | 60% | sans | 25% |
| n°2 | 15% | 60% | sans | 25% |
| n°3 | 14% | 60% | 1% | 25% |

2.3 : les compositions obtenues présentent les caractéristiques suivantes :
- volume de la fritte d'émail par rapport au volume total de composition (avec solvant) : 0,66.
- poids de l'extrait sec (solvant évaporé) par rapport au poids total de composition (avec solvant) : 0,75.
- volume de l'extrait sec (solvant évaporé) par rapport au volume total de composition (avec solvant) : 0,53.
- densité globale des solvants de la composition : 0,9.
- viscosité mesurée selon la norme DIN 53 211 (en utilisant une coupe consistométrique DIN-6 avec une ouverture de 6 mm) : 110 secondes.

3. Application de la composition d'émaillage sur le substrat et réticulation :
On applique la composition au rouleau, dans une configuration de type « reverse coil coating » (langue anglaise) dans laquelle la surface du rouleau d'application et celle du substrat défilent en sens contraires à l'endroit de l'application.
Sur les deux faces de la tôle, on applique ainsi une première couche de composition d'émail , puis on sèche et on réticule la première couche ; on applique ensuite sur les deux faces une deuxième couche de composition d'émail, puis on sèche et on réticule la deuxième couche.
Les conditions d'application sont adaptées pour obtenir une épaisseur totale réticulée de l'ordre de 130 µm.
Le traitement thermique de séchage et de réticulation est effectué dans les conditions correspondant à la figure 1 qui donne l'évolution de la température (°C) en fonction du temps (MIN:SEC) lors du traitement ; selon cette figure, la température maximale atteinte par la tôle lors du traitement est de l'ordre de 230°C et le temps de maintien à cette température est de l'ordre de 1 minute.
4. Mise en forme : à partir d'un flan de tôle revêtue de composition d'émail réticulée, on emboutit d'une manière classique une pièce de cuisinière.
5. Cuisson-vitrification de la pièce formée à partir de la tôle revêtue de composition d'émaillage réticulée.
A l'aide d'un four tunnel sous atmosphère ambiante et doté de moyens d'évacuation des fumées, on procède à la cuisson des pièces formées dans les conditions thermiques représentées à la figure 2, qui donne la température vue par une pièce en cours de traitement en fonction du temps (heure : min. : s.) ; les courbes 2 à 5 correspondent à des traitements considérés comme identiques pour lesquels la température maximale atteinte durant la cuisson est de l'ordre de 820°C.

### TESTS d'ÉVALUATION, à différents stades de la préparation des pièces formées émaillées:

1 - Tests effectués sur la composition d'application d'émaillage, après préparation : pour mémoire, mesure de viscosité : voir § Méthodes, point 2.3.
2 - Tests effectués sur la tôle revêtue de composition d'émail réticulée :
   2.1- Propriétés tribologiques de la surface revêtues :
      On mesure le coefficient de frottement sur la surface revêtue à l'aide d'un tribomètre en mode monofrottement sur une longueur frottée de 110 mm sous une pression d'appui variant linéairement de 0 à 800 10⁺⁵ Pa à la vitesse de 0.1 m/min.
      La valeur de coefficient retenue correspond à la valeur mesurée après stabilisation, généralement dès que la pression dépasse 150 à 300 10⁺⁵ Pa.
   2.2 - Résistance à la fissuration et au décollement du revêtement :
      2.2.1 - Résistance à la fissuration après pliage de la tôle sur elle-même ; on procède suivant le test dénommé en langue anglaise « T bend - Folding method », répertorié « T7 » par l'Association « ECCA », c'est à dire « European Coil Coating Association », publié le 2 avril 1996.
      2.2.2 - Résistance à la fissuration après pliage de la tôle sur un mandrin conique ; on procède suivant la norme NF EN ISO 1519 publiée en juin 1995, en effectuant des pliages sur des mandrins de diamètres (⌀) de plus en plus petits ; pour chaque pliage, on observe le revêtement dans la zone de pliage.
      2.2.3 - Résistance du revêtement à la fissuration et à l'arrachement par déformation rapide ou test de « tenue aux chocs » ; on procède suivant le test répertorié « T5 » par l'Association « ECCA », c'est à dire « European Coil Coating Association », publié le 14 décembre 1995 ; on repère, en Joule, l'énergie du choc en deçà de laquelle et pour laquelle on n'observe pas - a) de fissures - b) d'arrachements - c) d'arrachements jusqu'au niveau du substrat.
   2.3 - Résistance à la rayure : on procède suivant la norme ISO 1518 publiée en 1992 ; on mesure la charge minimale (daN) provoquant la rayure, c'est à dire pour laquelle l'aiguille a pénétré le revêtement.
   2.4 - Test d'adhérence ou résistance au pelage du revêtement :
      On procède suivant la norme NFT 30038 qui décrit un test dit de « quadrillage » : à l'aide d'un outil rayant présentant la forme d'un peigne dont les dents sont écartées de 1 à 2 mm, on forme des rayures ou des stries dans le revêtement ; on applique ensuite sur la zone striée un ruban adhésif, comme un ruban Scotch ® , puis on arrache ce ruban ; on observe ensuite la zone striée sur laquelle on a arraché le ruban ; selon ces observations, on classe le revêtement : classe 0 = très bonne résistance au pelage ; classe 3 = résistance au pelage moyenne.
   2.5 - Résistance au solvant : on imbibe un manchon de coton hydrophile à l'aide de méthyl-isobutyl-cétone et on frotte ensuite la surface revêtue à l'aide de ce manchon imbibé selon des mouvements de va-et-vient ; on effectue ainsi 20 aller-retour (A-R) et on observe ensuite d'éventuelles dégradations du revêtement sous l'action du solvant méthyl-isobutyl-cétone dans la zone soumise au frottement.
3 - Tests effectués sur la tôle émaillée, donc après cuisson-vitrification :
   3.1 - Adhérence de l'émail sur le substrat : ce test est effectué selon la norme européenne EN 10209 ; il consiste à déformer par choc l'échantillon de tôle émaillée en laissant tomber dessus un poinçon en chute libre à partir d'une hauteur qui est fonction de l'épaisseur de la tôle ; l'adhérence du revêtement est ensuite évaluée en fonction de la surface de la tôle mise à nue par l'impact du poinçon sur la tôle dans une échelle de valeurs 1 à 5 : impact ne mettant pas à nu l'acier, note 1 ; impact mettant totalement à nu l'acier, note 5.
   3.2 - Aspect de surface : ce test consiste à vérifier visuellement que la surface émaillée ne présente pas de défauts.
   3.3 - « Coups d'ongle » : ce test consiste à vérifier visuellement que la surface émaillée ne présente pas de défauts de type « coups d'ongle » ; la norme EN 10209 définit un test d'évaluation de la résistance aux coups d'ongle.
   3.4 - Évaluation de la résistance de la couche d'émail à l'acide citrique : ce tests est effectué dans les conditions définies dans la norme ISO 2722 et permet de classer les échantillons en plusieurs classes : du plus performant AA au moins performant D, on a ainsi les classes AA, A, B, C et D.

### ESSAIS

Trois essais de préparation de pièces formées émaillées ont été réalisés à partir des PRODUITS et selon les METHODES précédemment définis, donc à partir de la même base polyester pour le liant, sauf pour l'essai n°1 qui ne contient pas de produit LTW à indice COOH élevé ; la caractéristique essentielle de chaque essai est la suivante :
- essai n°1 : composition d'émaillage selon l'invention, mais aucun des polymères de la résine ne possède suffisamment de groupements « acide » pour que son indice COOH soit supérieur ou égal à 5 mg KOH/g.
- essai n°2 : composition d'émaillage selon l'invention dont la résine comprend 5% en poids d'un polymère doté de suffisamment de groupements « acide » pour posséder un indice COOH supérieur ou égal à 5 mg KOH/g, en l'occurrence 20 à 30 mg KOH/g.
- essai n°3 : composition d'émaillage selon l'invention, identique à celle de l'essai n°2 à laquelle on a ajouté 1% en poids d'un additif de lubrification à base de cire de polyéthylène pour faciliter l'emboutissage.

En cours d'essai ou en fin d'essai, on effectue les tests décrits ci-dessus au paragraphe TESTS ; les résultats obtenus ont été reportés au tableau suivant :

| **Résultats de tests ....** lors de : | Essai n° 1 | Essai n° 2 | Essai n° 3 |
|---|---|---|---|
| **1 -** Tests sur la composition : | | | |
| - viscosité DIN6/20°C DIN53211 | 110 s. | 110 s. | 110 s. |

| **2 -** Tests sur tôle revêtue non vitrifiée | | | |
|---|---|---|---|
| Propriétés tribologiques : | | | |
| - Coefficient de frottement : | 0,20 | 0,20 | 0,13 |
| Résistance à la fissuration : | | | |
| - << T bend >> ECCA T7 : | > 2T5 | 2T | 2T |
| - Mandrin conique ISO 1519 : | sans fissure si ⌀≥10 mm | sans fissure si ⌀≥10 mm | sans fissure si ⌀≥10 mm |
| - Tenue au chocs ECCA T5 : | | | |
| Limite supérieure en Joule : sans fissures | 4 J | 4 J | 4 J |
| - sans arrachements : | 6 J | 8 J | 8 J |
| - début d'arrachement jusqu'au métal : | 8 J | 12 J | 12 J |
| Résistance à la rayure ISO 1518 : | | | |
| - Charge mini. de pénétration : | 4 daN | >5 daN | >5 daN |
| Résistance au pelage : | | | |
| - Quadrillage NFT 30038 : | classe 3 | classe 0 | classe 0 |
| Résistance aux solvants : | | | |
| - pas de dégradation après : | 20 A-R | 20 A-R | 20 A-R |

| **3 -** Tests sur tôle émaillée : | | | |
|---|---|---|---|
| - Adhérence émail-acier EN10209 | Classe 1 | Classe 1 | Classe 1 |
| - Aspect de surface : | sans défauts | sans défauts | sans défauts |
| - Coups d'ongle : | aucun | aucun | aucun |
| - acide citrique ISO 2722 : | Classe A | Classe A | Classe A |

Selon les résultats, on constate :
- que tous les essais, réalisés conformément à l'invention, donnent des pièces émaillées de bonne qualité (voir résultats de tests sur tôle émaillée), alors qu'on a effectué la mise en forme après application de la composition d'émail ;
- que, dans tous les essais, on a pu appliquer la composition d'émaillage au rouleau, sans devoir adapter, en cours d'application, la viscosité de cette composition ; toutes les compositions d'émaillage conformes à l'invention restent stables à température ambiante ;
- que, pour les essais n°2 et n°3, on observe une meilleure résistance à la fissuration, une meilleure tenue au choc et une meilleure résistance au pelage du revêtement d'émail avant cuisson de vitrification, attribuables aux fonctionnalités « acide » plus nombreuses dans la résine de ces compositions d'émail, apportées par le produit LTW à indice COOH élevé ; ces résultats montrent que, au niveau de la mise en forme, le revêtement de composition d'émaillage selon l'invention présente une grande souplesse qui autorise de fortes déformations de tôle sans risque de dégradations, notamment lorsque la résine de la composition d'émaillage contient au moins 5% en poids, par rapport au poids total de polymères, d'un ou plusieurs polymères présentant un indice COOH supérieur ou égal à 20.
- que, pour l'essai n°3, on observe un coefficient de frottement beaucoup plus faible apporté par l'ajout, dans la composition d'émail, de seulement 1% en poids d'un additif de lubrification à base de cire de polyéthylène.

## Revendications

1. Composition liquide d'application d'émail vitreux du type comprenant principalement une résine polymère thermodurcissable, un solvant de ladite résine et plus de 50% en poids de fritte d'émail vitrifiable, **caractérisée en ce que** ladite résine comprend :
- un ou plusieurs polymères polyhydroxypolyesters et/ou un ou plusieurs polymères polyhydroxypolyacrylates en solution et/ou en émulsion, présentant un indice OH (ou « hydroxy ») compris entre 3 et 100 mg KOH par gramme, adaptés pour que le poids moléculaire moyen de la fraction solubilisée desdits polymères soit inférieur à 100 000 g/mole,
- au moins un agent de réticulation adapté pour réagir avec les fonctions « hydroxy » desdits polymères par transestérification ou par polyaddition, en quantité suffisante pour réticuler ladite résine,
- une quantité de catalyseur suffisante pour catalyser la réaction des groupements hydroxy desdits polymères et de l'au moins un agent de réticulation.

2. Composition selon la revendication 1 **caractérisée en ce que** ladite fritte d'émail vitrifiable comprend au moins 30% en poids de SiO₂, au moins 10% en poids de B₂O₃, et au moins 5% en poids de Na₂O.

3. Composition selon l'une quelconque des revendications 1 à 2 **caractérisée en ce que** aucun desdits polymères ne contient de fonctions « époxy ».

4. Composition selon l'une quelconque des revendications 1 à 3, **caractérisée en ce que**, dans le cas d'une réaction de réticulation par polyaddition, l'au moins un agent de réticulation est un isocyanate bloqué.

5. Composition selon la revendication 4 **caractérisée en ce que** la teneur pondérale en radicaux NCO dudit isocyanate est comprise entre 10 et 25% en poids.

6. Composition selon l'une quelconque des revendications 4 à 5, **caractérisée en ce que** la quantité d'isocyanate dans ladite composition est adaptée pour que le rapport d'équivalence des groupements OH de ladite résine aux groupements NCO de l'agent de réticulation soit compris entre 0,5 et 2,5.

7. Composition selon l'une quelconque des revendications 1 à 3, **caractérisée en ce que**, dans le cas d'une réaction de réticulation par transestérification, l'au moins un agent de réticulation est un composé aminoplaste.

8. Composition selon la revendication 7 **caractérisée en ce que** ledit composé aminoplaste est choisi dans le groupe comprenant les composés alkylés d'urée-aldéhyde, de mélamine-aldéhyde, de dicyandiamide-aldéhyde, et de triazine-aldéhyde.

9. Composition selon la revendication 8 **caractérisée en ce que** ledit composé aminoplaste est à base d'hexaméthoxyméthyl mélamine.

10. Composition selon l'une quelconque des revendications précédentes, **caractérisée en ce qu'**au moins un desdits polymères de la résine présente des groupements « acide» de ramification, de manière à ce que l'indice COOH dudit polymère soit supérieur ou égal à 5 mg KOH par gramme.

11. Composition selon la revendication 10 **caractérisée en ce que** la proportion, dans ladite résine, de l'au moins un polymère d'indice COOH supérieur ou égal à 5 mg KOH par gramme est supérieure ou égale à 5% en poids.

12. Composition selon l'une quelconque des revendications précédentes **caractérisée en ce qu'**elle comprend un additif de lubrification.

13. Composition selon la revendication 12 **caractérisée en ce que** ledit additif de lubrification est à base de cire de polyéthylène.

14. Procédé de production d'une tôle revêtue d'émail vitrifiable comprenant les étapes consistant à :
- préparer une composition d'application d'émail vitreux selon l'une quelconque des revendications 1 à 13,
- appliquer ladite composition sur la tôle à revêtir,
- cuire la tôle ainsi revêtue de ladite composition dans des conditions adaptées pour faire réticuler ladite résine.

15. Procédé selon la revendication 14 **caractérisé en ce que** l'application de ladite composition est réalisée par enduction.

16. Procédé de production d'une tôle revêtue d'émail vitrifié **caractérisé en ce qu'**il comprend une étape de cuisson de vitrification d'une tôle revêtue d'émail vitrifiable obtenue par le procédé selon l'une quelconque des revendications 14 à 15.

17. Procédé de production d'une pièce formée en tôle émaillée comprenant les étapes consistant à :
- préparer une composition d'application d'émail vitreux selon l'une quelconque des revendications 1 à 13,
- appliquer ladite composition sur une tôle,
- cuire la tôle ainsi revêtue de ladite composition dans des conditions adaptées pour faire réticuler ladite résine,
- mettre en forme la tôle revêtue de ladite composition réticulée, dans la forme de ladite pièce à produire,
- cuire la pièce formée revêtue de ladite composition réticulée dans des conditions d'une part adaptées pour obtenir une pyrolyse complète de ladite résine réticulée, d'autre part adaptées pour vitrifier ladite fritte vitrifiable.

18. Procédé selon la revendication 17 **caractérisé en ce que** l'application de ladite composition est réalisée par enduction.

## Patentansprüche

1. Zusammensetzung einer Glasemaille-Beschichtungsflüssigkeit, hauptsächlich aufweisend ein wärmeaushärtbares Harzpolymer, ein Lösungsmittel für Harz und mehr als 50 Gew.-% verglasbare Emaillefritte, **dadurch gekennzeichnet, dass** das Harz folgendes aufweist:
einen oder mehrere Polyhydroxypolesterpolymere und/oder einen oder mehrere Polyhydroxypolyacrylatpolymere Lösung und/oder Emulsion mit einer OH-Zahl (oder "Hydroxy"-Zahl) zwischen 3 und 100 mg KOH pro Gramm, wobei das mittlere Molekulargewicht der löslichen Fraktion der Polymere geringer als 100 000 g/Mol ist,
zumindest ein Vernetzungsmittel zur Reaktion mit den "Hydroxy"-Funktionen der Polymere durch Transverestherung oder Polyaddition mit einer zur Vernetzung des Harzes ausreichenden Menge,
eine zum Katalysieren der Reaktion der Hydroxygruppe der Poylmere und dem zumindest einen Vernetzungsmittel ausreichenden Katalysatormenge.

2. Zusammensetzung nach Anspruch 1, **dadurch gekennzeichnet, dass** die verglasbare Emaillefritte zumindest 30 Gew.-% SiO₂, zumindest 10 Gew.-% B₂O₃ und zumindest 5 Gew.-% Na₂O umfasst.

3. Zusammensetzung nach Anspruch 1 oder 2, **dadurch gekennzeichnet, dass** die Polymere keine "Epoxy"-Funktionen enthalten.

4. Zusammensetzung nach einem der Ansprüche 1 bis 3, **dadurch gekennzeichnet, dass** im Fall einer Vernetzungsreaktion durch Polyaddition das zumindest eine Vernetzungsmittel ein blockiertes Isocyanat ist.

5. Zusammensetzung nach Anspruch 4, **dadurch gekennzeichnet, dass** der gewichtsanalytische Gehalt an NCO-Radikalen des Isocyanats zwischen 10 und 25 Gew.-% beträgt.

6. Zusammensetzung nach Anspruch 4 oder 5, **dadurch gekennzeichnet, dass** die Isocyanatmenge in der Zusammensetzung so gewählt ist, dass das Äquivalenzverhältnis der OH-Gruppen des Harzes zu den NCO-Gruppen des Vernetzungsmittels zwischen zwischen 0,5 und 2,5 beträgt.

7. Zusammensetzung nach einem der Ansprüche 1 bis 3, **dadurch gekennzeichnet, dass** im Fall einer Vernetzungsreaktion durch Transveresterung zumindest ein Vernetzungsmittel aus Aminoplast besteht.

8. Zusammensetzung nach Anspruch 7, **dadurch gekennzeichnet, dass** die Aminoplastzusammensetzung ausgewählt ist aus der Gruppe, die Harnstoffaldehydalkyle, Melaminaldehyd, Dicyandiamidaldehyd und Triacinaldehyd umfasst.

9. Zusammensetzung nach Anspruch 8, **dadurch gekennzeichnet, dass** die Aminoplastzusammensetzung auf Melaminhexamethoxymethyl basiert.

10. Zusammensetzung nach einem der vorangehenden Ansprüche, **dadurch gekennzeichnet, dass** zumindest die Polymere des Harzes "Säure"-Verzweigungsgruppen aufweisen, so dass die COOH-Zahl des Polymers größer als oder gleich 5 mg KOH pro Gramm beträgt.

11. Zusammensetzung nach Anspruch 10, **dadurch gekennzeichnet, dass** der Anteil in dem Harz von dem zumindest einen Polymer mit einer COOH-Zahl größer oder gleich 5 mg KOH pro Gramm größer oder gleich 5 Gew.-% beträgt.

12. Zusammensetzung nach einem der vorangehenden Ansprüche, **dadurch gekennzeichnet, dass** sie einen Schmierungszusatz umfasst.

13. Zusammensetzung nach Anspruch 12, **dadurch gekennzeichnet, dass** der Schmierungszusatz auf Polyethylenwachs basiert.

14. Verfahren zur Herstellung eines mit einem verglasbaren Emaille überzogenen Blech, aufweisend die Schritte:
Zubereiten einer Glasemaille-Beschichtungszusammensetzung nach einem der Ansprüche 1 bis 13,
Auftragen dieser Zusammensetzung auf dem zu beschichtenden Blech,
Brennen des derart mit der Zusammensetzung beschichteten Blechs unter Bedingungen, die dazu geeignet sind, das Harz zu vernetzen.

15. Verfahren nach Anspruch 14, **dadurch gekennzeichnet, dass** das Auftragen der Zusammensetzung durch Beschichten erfolgt.

16. Verfahren zur Herstellung eines mit Glasemaille überzogenen Blechs, **dadurch gekennzeichnet, dass** es den Schritt umfasst, ein mit verglasbarem Emaille überzogenes Blech zur Verglasung zu brennen, das hergestellt ist durch das Verfahren nach Anspruch 14 oder 15.

17. Verfahren zur Herstellung eines emaillierten Blechformteils, aufweisend die Schritte:
Zubereiten einer Glasemaille-Beschichtungszusammensetzung nach einem der Ansprüche 1 bis 13,
Auftragen der Zusammensetzung auf ein Blech,
Brennen des derart mit der Zusammensetzung beschichteten Blechs unter Bedingungen, die dazu geeignet sind, das Harz zu vernetzen,
Formen des mit der vernetzten Zusammensetzung beschichteten Blechs in die Form des herzustellenden Teils,
Brennen des geformten Teils, das mit der vernetzten Zusammensetzung beschichtet ist unter Bedingungen, die dazu geeignet sind, eine vollständige Pyrolyse des vernetzten Harzes zu erhalten und andererseits, die verglasbare Fritte zu verglasen.

18. Verfahren nach Anspruch 17, **dadurch gekennzeichnet, dass** das Auftragen der Zusammensetzung durch Beschichten verwirklicht wird.

## Claims

1. Liquid composition for applying vitreous enamel of the type consisting mainly of a thermosetting polymer resin, a solvent of the said resin and more than 50% by weight of a vitrifiable enamel frit, **characterised in that** the said resin comprises:
- one or more polyhydroxy-polyester polymers and/or one or more polyhydroxypolyacrylate polymers in solution and/or as an emulsion, having an OH (or "hydroxy") index between 3 and 100 mg KOH per gram, adapted so that the mean molecular weight of the solubilised fraction of the said polymers is below 100,000 grams/mol;
- at least one reticulation agent adapted to react with the "hydroxy" functions of the said polymers by transesterification or by polyaddition, in sufficient quantity to reticulate the said resin;
- a sufficient quantity of catalyst to catalyse the reaction of the hydroxy groups of the said polymers and of at least one reticulation agent.

2. Composition according to Claim 1, **characterised in that** the said vitrifiable enamel frit consists of at least 30% by weight of SiO₂, at least 10% by weight of B₂O₃, and at least 5% by weight of Na₂O.

3. Composition according to any one of the Claims I to 2, **characterised in that** none of the said polymers contains "epoxy" functions.

4. Composition according to any one of the Claims 1 to 3, **characterised in that**, in the case of a reticulation reaction by polyaddition, at least one reticulation agent is a blocked isocyanate.

5. Composition according to Claim 4, **characterised in that** the weight content in NCO radicals of the said isocyanate is between 10 and 25% by weight.

6. Composition according to any one of the Claims 4 to 5, **characterised in that** the quantity of isocyanate in the said composition is adapted so that the ratio of equivalence of the OH groups of the said resin to the NCO groups of the reticulation agent is between 0.5 and 2.5.

7. Composition according to any one of the Claims 1 to 3, **characterised in that**, in the case of a reticulation reaction by transesterification at least one reticulation agent is an aminoplast compound.

8. Composition according to Claim 7, **characterised in that** the said aminoplast compound is chosen from the group including the alkyl compounds of urea-aldehyde, melamine-sldehyde, dicyano diamide-aldehyde and triazine-aldehyde.

9. Composition according to Claim 8 **characterised in that** the said aminoplast compound is hexamethoxy methyl melamine based.

10. Composition according to any one of the preceding claims, **characterised in that** at least one of the said polymers of the resin has "acid" branching groups, so that the COOH index of the said polymer is above or equal to 5mg KOH per gram.

11. Composition according to Claim 10, **characterised in that** the proportion, in the said resin, of at least one polymer of COON index higher than or equal to 5 mg KOH per gram is above or equal to 5% by weight.

12. Composition according to any one of the preceding claims, **characterised in that** it includes a lubricating additive,

13. Composition according to Claim 12, **characterised in that** the said lubricating additive is polyethylene wax based.

14. A process for producing a vitrifiable enamel coated metal sheet including stages consisting in:
- preparing a composition for applying vitreous enamel according to any one of the Claims 1 to 13;
- applying the said composition onto the metal sheet to be coated;
- firing the metal sheet thus coated with the said composition under conditions suitable for reticulating the said resin.

15. A process according to Claim 14, **characterised in that** the said composition is applied by coating.

16. A process for producing a vitrified enamel coated metal sheet, **characterised in that** it includes a firing stage for vitrifying a vitrifiable enamel coated metal sheet made by the process according to any one of the Claims 14 to 15.

17. A process for producing a part formed from enamelled metal sheet including stages consisting in:
- preparing a composition for applying vitreous enamel according to any one of the Claims 1 to 13;
- applying the said composition to a metal sheet;
- firing the metal sheet thus coated with the said composition under conditions suitable for reticulating the said resin;
- forming the metal sheet coated with the said reticulated composition, in the form of the said part to be produced;
- firing the formed part coated with the said reticulated composition under conditions on the one hand suitable for achieving complete pyrolysis of the said reticulated resin and, on the other hand, suitable for vitrifying the said vitrifiable frit.

18. A process according to Claim 17, **characterised in that** the said composition is applied by coating.
